# EUROPEAN PATENT APPLICATION

(11) **EP 4 443 244 A1**
(43) Date of publication of application: **09.10.2024**
(21) Application number: 24168263.2
(22) Date of filing: 03.04.2024
(51) Int. Cl.: G03G 15/08, B41J 2/045, B41J 2/175, G03G 15/00

(54) **IMAGE FORMING DEVICE AND IMAGE FORMATION SYSTEM**

(30) Priority: 05.04.2023 JP 2023061329
(71) Applicant: BROTHER KOGYO KABUSHIKI KAISHA, Aichi-ken 467-8561 (JP)
(72) Inventor: OKI, Satoru, Nagoya, 467-8562 (JP); MORI, Tetsunori, Nagoya, 467-8562 (JP); KIMOTO, Taichiro, Nagoya 467-8562 (JP); MIYAZAKI, Sadaaki, Nagoya, 467-8562 (JP)
(74) Representative: Kuhnen & Wacker Patent- und Rechtsanwaltsbüro PartG mbB

(57) **Abstract**

A controller of an image forming device is configured to perform: an elapsed time acquisition process; an evaluation value acquisition process; and an outputting process. The elapsed time acquisition process acquires a length of elapsed time in each of a first time period and a second time period. The evaluation value acquisition process acquires a first evaluation value for the first time period and a second evaluation value for the second time period. Each of the first and second evaluation values specifies a degree of change in a quality of colorant in a cartridge during a corresponding one of the first and second time periods and is based on the length of elapsed time acquired in the elapsed time acquisition process and an ambient environment of the cartridge affecting the quality of the colorant. The outputting process outputs an output value reflecting both the first and second evaluation values.

## Description

The present invention relates to an image forming device to which a cartridge storing a colorant to be used for image forming operations is detachably attachable.

One conventional technology evaluates the quality of colorant in a recovered used cartridge on the basis of the environment in which the cartridge has been used (the usage environment of the cartridge, etc.) recorded in the cartridge. Japanese Patent Application Publication No. 2004-314642 is one such technology that determines whether a cartridge is reusable on the basis of this type of evaluation.

However, Japanese Patent Application Publication No. 2004-314642 does not provide a detailed description of how the ambient environment of a cartridge is reflected in its evaluation. Moreover, the ambient environment of a cartridge likely changes continually. Thus, the quality of colorant in a cartridge also changes due to the effects of the ambient environment. Therefore, recovered cartridges must be suitably evaluated on the basis of their past ambient environment, which may have fluctuated in a variety of ways.

In view of the foregoing, it is an object of the present invention to provide an image forming device and an image formation system that can appropriately evaluate cartridges that have been detached from the image forming device and recovered by taking into account fluctuations in their usage environment.

In order to attain the above and other object, according to first aspect, the present disclosure provides an image forming device. A cartridge storing colorant to be used for image formation is detachably attachable to the image forming device. The image forming device includes: an image formation portion; and a controller. The image formation portion is configured to form an image on a medium using the colorant stored in the cartridge attached to the image forming device. The controller is configured to perform: an elapsed time acquisition process; an evaluation value acquisition process; and an outputting process. The elapsed time acquisition process acquires a length of elapsed time in each of a first time period and a second time period. The evaluation value acquisition process acquires an evaluation value including a first evaluation value for the first time period and a second evaluation value for the second time period. Each of the first evaluation value and the second evaluation value specifies a degree of change in a quality of the colorant in the cartridge during a corresponding one of the first time period and the second time period and is based on the length of elapsed time acquired in the elapsed time acquisition process and an ambient environment of the cartridge affecting the quality of the colorant. The ambient environment in the first time period is different from the ambient environment in the second time period. The outputting process outputs an output value reflecting both the first evaluation value and the second evaluation value.

In the above configuration, evaluation values each specifying a degree of change in a quality of colorant in a cartridge based on the length of elapsed time and the ambient environment of the cartridge are acquired for two periods of time whose ambient environments differ for each other, and an output value reflecting both the evaluation values for the two periods of time is subsequently outputted. Therefore, the quality of the colorant in the cartridge detached from the image forming device and recovered can be appropriately evaluated while accounting for fluctuating conditions in the ambient environment.

According to second aspect, it is preferable in the image forming device of the first aspect: that the image forming device further includes: an acquisition portion; that the acquisition portion is configured to acquire an environmental value indicating the ambient environment; and that in the evaluation value acquisition process, the controller acquires the evaluation value based on the environmental value acquired by the acquisition portion.

According to third aspect, it is preferable in the image forming device of the second aspect: that in the evaluation value acquisition process, the controller acquires the first evaluation value assuming that no fluctuations occur in the ambient environment during the first time period, and acquires the second evaluation value based on the environmental value acquired by the acquisition portion during the second time period.

According to fourth aspect, it is preferable in the image forming device of the third aspect: that in the evaluation value acquisition process, the controller acquires, for the second time period, a plurality of interval evaluation values for respective ones of a plurality of predetermined time intervals in the second time period and accumulates the plurality of interval evaluation values to acquire the second evaluation value; and that each of the plurality of interval evaluation values is based on the length of elapsed time in each predetermined time interval and the environmental value acquired in a corresponding one of the plurality of predetermined time intervals.

According to fifth aspect, it is preferable in the image forming device of the third aspect: that in the evaluation value acquisition process, the controller acquires, for the second time period, at least one interval evaluation value for respective ones of at least one time interval in the second time period and accumulates at least one interval evaluation value to acquire the second evaluation value; and that the at least one interval evaluation value is acquired each time a predetermined change in the environment value acquired by the acquisition portion occurs and is based on the length of elapsed time in a corresponding one of the at least one time interval and the environmental value acquired in the corresponding one of the at least one time interval.

According to sixth aspect, it is preferable in the image forming device of any one of the second to fifth aspects: that the environmental value acquired by the acquisition portion indicates a temperature.

According to seventh aspect, it is preferable in the image forming device of any one of the first to sixth aspects: that the quality of the colorant is related to an amount of a liquid in the colorant; and that the evaluation value is an estimated evaporation amount of the liquid in the colorant.

According to eighth aspect, it is preferable in the image forming device of any one of the second to sixth aspects: that the quality of the colorant is related to an amount of a liquid in the colorant; that the controller includes a storage portion; that the storage portion is configured to store an evaporation degree value specifying a degree of evaporation in association with the environmental value for the liquid in the colorant; and that in the evaluation value acquisition process, the controller acquires, as the evaluation value, an estimated evaporation amount of the liquid in the colorant based on the environmental value acquired by the acquisition portion and the evaporation degree value stored in the storage portion in association with the environmental value.

According to ninth aspect, it is preferable in the image forming device of any one of the first to eighth aspects: that the first time period is a period of time prior to the cartridge being attached to the image forming device; and that the second time period is a period of time during which the cartridge is attached to the image forming device.

According to tenth aspect, it is preferable in the image forming device of any one of the first to ninth aspects: that outputting process includes at least one of: an output value recording process; and a transmitting process; that the output process records the output value in a recording portion of the cartridge; and that the transmitting process transmits the output value to an external device via a communication network.

According to eleventh aspect, it is preferable in the image forming device of any one of the first to ninth aspects: that the outputting process includes: an output value recording process; and a current time recording process; that the output value recording process records the output value in a recording portion of the cartridge; and that the current time recording process periodically records a current time in the recording portion of the cartridge.

According to twelfth aspect, the present disclosure also provides an image formation system. The image formation system includes: the image forming device of the eleventh aspect; the cartridge; and an evaluation device. The evaluation device is configured to perform: a second elapsed time acquisition process; a second evaluation value acquisition process; and a determination process. The second elapsed time acquisition process acquires a length of elapsed time in a third time period based on the current time recorded in the recording portion of the cartridge. The third time period is a period of time after the cartridge is detached from the image forming device. The second evaluation value acquisition process acquires a third evaluation value for the third time period. The third evaluation value specifies a degree of change in a quality of the colorant in the cartridge during the third time period and is based on the length of elapsed time acquired in the second elapsed time acquisition process. The determination process determines whether the cartridge is reusable on the basis of the third evaluation value acquired in the second evaluation value acquisition process and the output value recorded in the recording portion of the cartridge.
FIG. 1 is a block diagram illustrating the configuration of a printer system including a printer according to one embodiment of the present invention, an ink cartridge attached to the printer, and an evaluation device at a recycling plant.
FIG. 2 is an explanatory diagram illustrating a table showing relationships between coefficients related to degrees of evaporation for a liquid in ink used in the printer illustrated in FIG. 1 and temperatures.
FIG. 3 is an explanatory diagram illustrating a series of periods of time in which an ink cartridge is manufactured, attached to and used on the printer illustrated in FIG. 1, and then recovered and evaluated at a recycling plant.
FIG. 4 is a flow chart illustrating steps in a process of acquiring and accumulating evaluation values according to a first method, where the evaluation value specifies the degree of deterioration in quality that occurs in ink in the ink cartridge during one period of time illustrated in FIG. 3.
FIG. 5 is a flowchart illustrating steps in a process of acquiring and accumulating evaluation values according to a second method, where the evaluation value specifies the degree of deterioration in quality that occurs in ink in the ink cartridge during one period of time illustrated in FIG. 3.
FIG. 6 is a flowchart illustrating steps in a process performed by the evaluation device illustrated in FIG. 1.
FIG. 7 is an explanatory diagram illustrating a graph showing relationships between estimated amounts of evaporation and elapsed time.

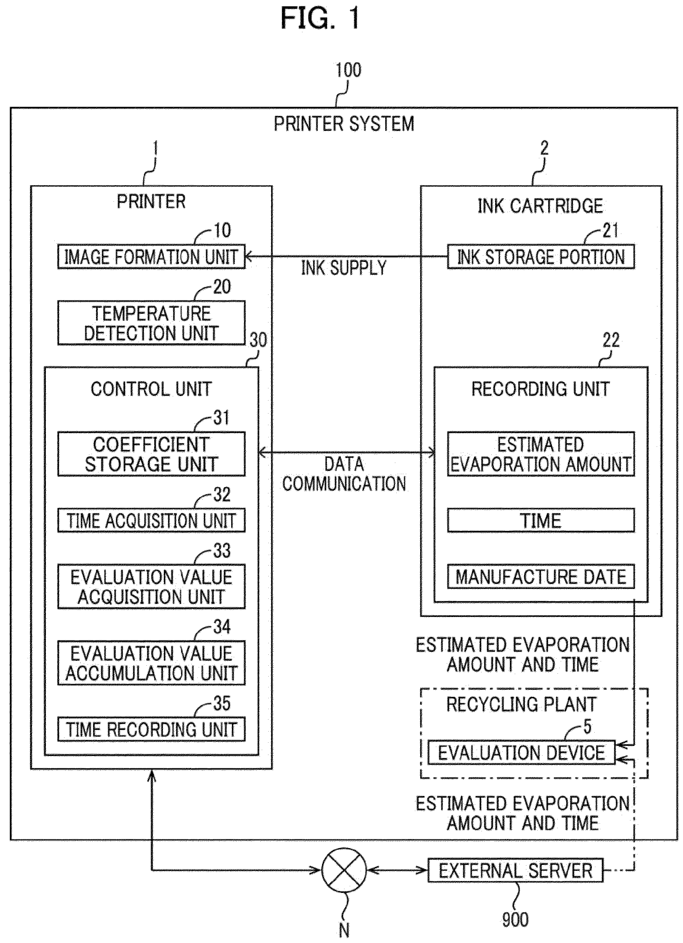

A printer system 100 according to an embodiment of the present invention will be described below while referring to FIGS. 1 through 6. The printer system 100 (corresponding to the "image formation system" of the present invention) includes a printer 1, an ink cartridge 2 that is attached to the printer 1, and an evaluation device 5 installed in a recycling plant. The evaluation device 5 will be described later in greater detail. The printer 1 is capable of communicating with an external server 900 via a communication network N, such as the Internet. The external server 900 manages registration information on customers and the like.

The ink cartridge 2 includes an ink storage portion 21, and a recording unit 22. The ink storage portion 21 stores ink. The recording unit 22 is an IC chip in the present embodiment. Ink in the ink storage portion 21 is supplied to the printer 1 to which the ink cartridge 2 is attached. When the ink cartridge 2 is attached to the printer 1, a read/write unit provided on the printer 1 side (not illustrated in the drawings) can read data from and write data to the recording unit 22. In the present embodiment, the description will be made as to a case in which only one ink cartridge 2 can be attached to the printer 1 as an example, but the present invention is not limited to this case. Multiple ink cartridges 2, for example four ink cartridges 2, may be attached to the printer 1.

As illustrated in FIG. 1, the printer 1 includes an image formation unit 10, a temperature detection unit 20, and a control unit 30.

The image formation unit 10 accommodates printing paper. The image formation unit 10 performs image forming operations under the control of the control unit 30. In the image forming operations, the image formation unit 10 forms images on printing paper based on image data by depositing ink supplied from the ink cartridge 2 onto the printing paper.

The temperature detection unit 20 is a sensor that detects the ambient temperature near the ink cartridge 2. The temperature detection unit 20 is disposed near the location to which the ink cartridge 2 is attached, either inside or outside the housing of the printer 1. The temperature detection unit 20 outputs the detection results to the control unit 30.

The control unit 30 is provided with hardware, such as a central processing unit (CPU), read-only memory (ROM), random-access memory (RAM), an application-specific integrated circuit (ASIC), and a current time keeping unit. The ROM stores program data and the like executed by the CPU and ASIC. The RAM stores image data acquired from external sources and data used when the CPU executes programs. The CPU is hardware that executes various processes according to software such as program data and other data stored in the ROM and RAM. The execution of these processes constructs in the control unit 30 a coefficient storage unit 31 and the like illustrated in FIG. 1 (described later) as functional units corresponding to the various processes.

During image forming operations, ink stored in the ink storage portion 21 of the ink cartridge 2 is continuously used until the ink storage portion 21 runs out of residual ink. When the ink storage portion 21 has run out of ink, the user detaches the ink cartridge 2 from the printer 1 and replaces the used ink cartridge 2 with a new ink cartridge 2. Used ink cartridges 2 detached from the printer 1 are properly collected and subjected to a recycling process at the recycling plant.

Normally, the ink in the ink storage portion 21 of the ink cartridge 2 is not entirely used up before the ink cartridge 2 is replaced and, hence, a small amount of ink remains in the ink storage portion 21 of the recovered ink cartridge 2. This residual ink is drained from the ink storage portion 21 during the recycling process, but it is impossible to remove all ink completely from the ink storage portion 21 so that none remains. Therefore, when the ink cartridge 2 is refilled with new ink in the recycling process, the new ink will mix with the residual ink. However, due to the evaporation of liquid from components in the ink, the quality of the residual ink has deteriorated. Therefore, depending on the quality of the residual ink, the ink in the ink cartridge 2 after refilling may not be of sufficient quality. To ensure that the quality of ink in a refilled ink cartridge 2 is acceptable, some conventional technologies determine whether the ink cartridge can be reused on the basis of the cartridge's usage environment and the like and only allow the ink cartridge to be refilled with ink when determining that the ink cartridge is reusable (see Japanese Patent Application Publication No. 2004-314642). However, when the method of evaluating the ink quality is not appropriate, the ink cartridge may be judged to be unusable even though the ink cartridge is in fact reusable, and recovered ink cartridges may be wasted.

Therefore, the present embodiment employs the following configuration to help make a proper determination regarding whether a used ink cartridge 2 is reusable.

An estimated evaporation amount and a time are recorded in the recording unit 22 of the ink cartridge 2. As will be described later, the control unit 30 records this information in the recording unit 22 during the period that the ink cartridge 2 is attached to the printer 1. The manufacture date of the ink cartridge 2 is also recorded in the recording unit 22. Although not illustrated in the drawings, information on the type and color of ink in the ink cartridge 2 is also recorded in the recording unit 22.

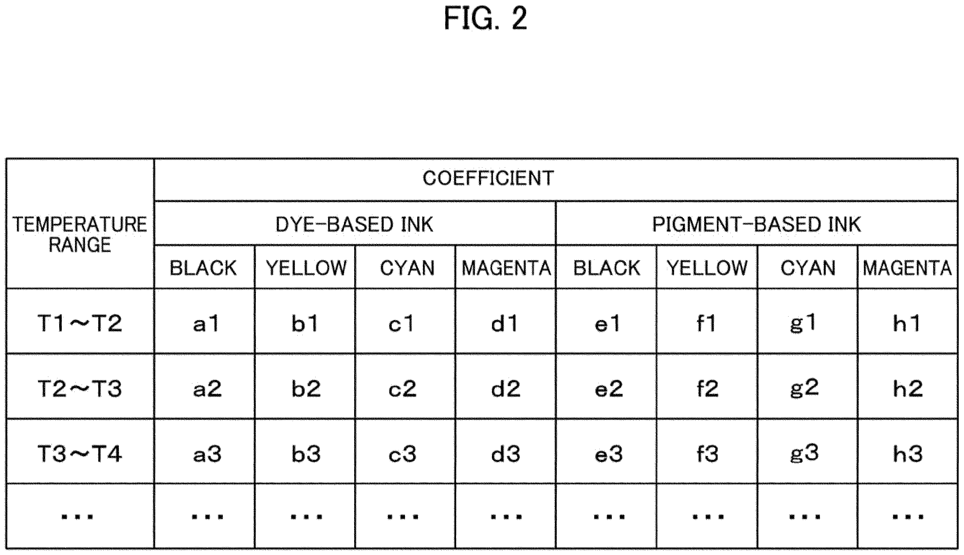

The control unit 30 has a coefficient storage unit 31, a time acquisition unit 32, an evaluation value acquisition unit 33, an evaluation value accumulation unit 34, and a time recording unit 35. The coefficient storage unit 31 (corresponding to the "storage portion" of the present invention) stores a coefficient (an evaporation coefficient) related to the degree of evaporation for a liquid in the ink (amount of liquid evaporated per unit time) corresponding to the temperature. For example, coefficients are stored in the coefficient storage unit 31 in association with various temperature ranges, as illustrated in FIG. 2. In this example, T1, T2, T3, and T4 indicate temperatures of increasingly high values. Additionally, a1, a2, and a3 are coefficients corresponding to black dye-based ink; b 1, b2, and b3 are coefficients corresponding to yellow dye-based ink; c1, c2, and c3 are coefficients corresponding to cyan dye-based ink; and d1, d2, and d3 are coefficients corresponding to magenta dye-based ink. Furthermore, e1, e2, and e3 are coefficients corresponding to black pigment-based ink; f1, f2, and f3 are coefficients corresponding to yellow pigment-based ink; g1, g2, and g3 are coefficients corresponding to cyan pigment-based ink; and h1, h2, and h3 are coefficients corresponding to magenta pigment-based ink. In this way, different coefficients are set for different types of ink, such as dye-based or pigment-based ink and different colors of ink. The time acquisition unit 32 acquires the current time, including the year, month, and day, by referencing the current time keeping unit in hardware.

The evaluation value acquisition unit 33 acquires an evaluation value specifying the degree of deterioration in quality that occurs in ink in the ink cartridge 2 over time. The evaluation value according to the present embodiment corresponds to an estimated amount of liquid evaporated from ink in the ink cartridge 2 over a predetermined period of time. The evaluation value accumulation unit 34 accumulates the evaluation values acquired by the evaluation value acquisition unit 33 as the estimated evaporation amount stored in the recording unit 22 of the ink cartridge 2. That is, each time the evaluation value acquisition unit 33 acquires an evaluation value, the evaluation value accumulation unit 34 adds that evaluation value to the estimated evaporation amount. The process in which the estimated evaporation amount is stored in the recording unit 22 of the ink cartridge 2 in this way corresponds to the "outputting process" of the present invention. In addition, the estimated evaporation amount corresponds to the "output value" of the present invention.

The time recording unit 35 periodically (e.g., every few days, every day, every few hours, every hour, etc.) records the current time acquired by the time acquisition unit 32 in the recording unit 22 of the ink cartridge 2. The content recorded in the recording unit 22 is used at the recycling plant to evaluate the quality of the used ink cartridge 2, as will be described later.

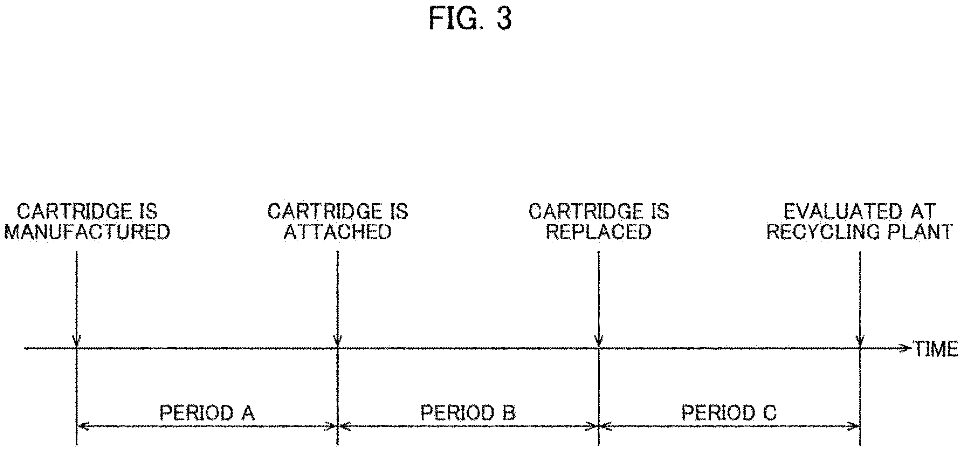

The acquisition and accumulation of evaluation values will be described below in detail with reference to FIGS. 3 through 5. As illustrated in FIG. 3, an evaluation value is acquired for a period A prior to the ink cartridge 2 being attached to the printer 1 (corresponding to the "first time period" of the present invention), and a period B during which the ink cartridge 2 is attached to the printer 1 (corresponding to the "second time period" of the present invention). The evaluation value for period B is then added to the evaluation value for period A. In other words, the evaluation values for both period A and period B are accumulated.

The following is for period A. Period A is the period of time from the manufacture date of the ink cartridge 2 until the ink cartridge 2 is attached to the printer 1. At the moment the ink cartridge 2 is attached to the printer 1, the evaluation value acquisition unit 33 reads the manufacture date recorded in the recording unit 22 of the ink cartridge 2. The time acquisition unit 32 acquires the time at which the ink cartridge 2 is attached to the printer 1. The evaluation value acquisition unit 33 then multiplies the length of period A by a prescribed value (a fixed value) on the basis of the manufacture date read from the recording unit 22 and the acquisition results of the time acquisition unit 32 and sets the evaluation value for period A to this multiplication result.

Compared to period B described later, large fluctuations in the ambient environment are unlikely to occur during period A, assuming that the ink cartridge 2 has been properly packaged and stored. Therefore, a suitable evaluation value can be obtained, even when the prescribed value described above is fixed. Moreover, the above prescribed value is set to a relatively small value. For example, this prescribed value may be set to a relatively small value in the range of values covered by the coefficient stored in the coefficient storage unit 31 for changes in temperature or may be set to a value smaller than the lower limit of this value range. That is, due to the same circumstances described above, deterioration in ink quality is less likely to occur in period A than in period B. Note that the length of period A is an example of the "length of elapsed time" of the present invention, and the process to acquire the length of period A is an example of the "elapsed time acquisition process" of the present invention.

The evaluation value acquired by the evaluation value acquisition unit 33 for period A is recorded in the recording unit 22 of the ink cartridge 2 as the initial value for the estimated evaporation amount.

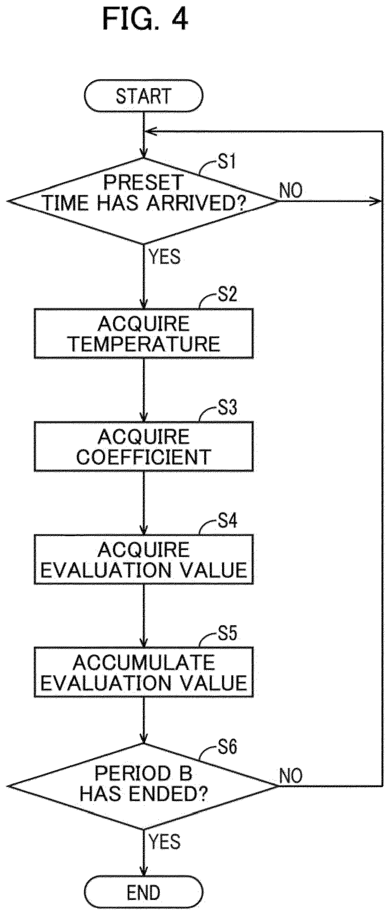

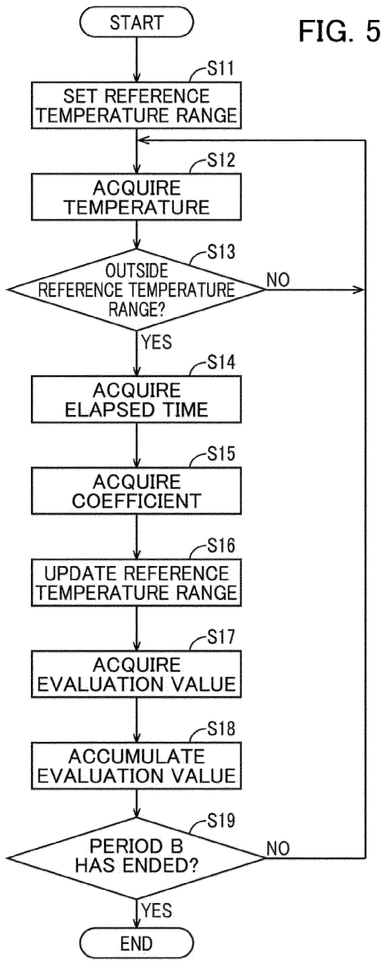

The following is for period B. Period B is the period of time from when the ink cartridge 2 is first attached to the printer 1 until the used ink cartridge 2 is detached from the printer 1 to be replaced. The evaluation value for period B is obtained using one of a first method illustrated in FIG. 4 and a second method illustrated in FIG. 5.

In the first method, the evaluation value accumulation unit 34 acquires an evaluation value periodically. Specifically, in S1 the evaluation value acquisition unit 33 waits for preset times (e.g., 6:00, 12:00, 18:00, and 24:00) to arrive (S1: NO). When the evaluation value acquisition unit 33 determines that one of the preset times has arrived (S 1: YES), in S2 the evaluation value acquisition unit 33 acquires the temperature detected by the temperature detection unit 20. In S3 the evaluation value acquisition unit 33 acquires a coefficient stored in the coefficient storage unit 31 associated with the temperature acquired in S2. In the present embodiment, the coefficient storage unit 31 stores eight coefficients in association with one temperature range, as described above and illustrated in FIG. 2. Thus, the evaluation value acquisition unit 33 acquires a coefficient corresponding to the ink cartridge 2 subjected to the evaluation. Specifically, the evaluation value acquisition unit 33 acquires the information on the type and color of ink in the ink cartridge 2 stored in the recording unit 22 of the ink cartridge 2, and acquires a coefficient corresponding to the specified type and color of ink in the ink cartridge 2.

In S4 the evaluation value acquisition unit 33 acquires an evaluation value by multiplying the coefficient acquired in S3 by the length of elapsed time between preset times (six hours in the above example). In S5 the evaluation value accumulation unit 34 then adds the evaluation value acquired in S4 to the estimated evaporation amount in the recording unit 22 of the ink cartridge 2 to thereby acquire the accumulated evaluation values that have been acquired. The evaluation value acquisition unit 33 and evaluation value accumulation unit 34 repeat the above process from S 1 while period B has not yet ended (S6: NO). Once period B has ended (i.e., when the ink cartridge 2 is detached from the printer 1; S6: YES), the process of FIG. 4 ends. Note that the process of S2 through S5 to acquire and accumulate the evaluation value is an example of the "evaluation value acquisition process" of the present invention.

In the second method of FIG. 5, the evaluation value acquisition unit 33 acquires an evaluation value each time a predetermined temperature change occurs. In S11 of FIG. 5, the evaluation value acquisition unit 33 sets a reference temperature range based on the temperature detected by the temperature detection unit 20 when the ink cartridge 2 is attached to the printer 1. The reference temperature range corresponds to one of the temperature ranges stored in the coefficient storage unit 31. Using the example of the temperature ranges illustrated in FIG. 2, when the temperature t0 at the time the ink cartridge 2 is attached to the printer 1 corresponds to a value within the temperature range T2-T3, the evaluation value acquisition unit 33 sets the reference temperature range to T2-T3.

In S12 the evaluation value acquisition unit 33 acquires the temperature detected by the temperature detection unit 20. In S13 the evaluation value acquisition unit 33 determines whether the temperature acquired in S12 is outside the reference temperature range. When the evaluation value acquisition unit 33 determines that the temperature acquired in S12 does not deviate from the reference temperature range (S13: NO), the evaluation value acquisition unit 33 returns to the process of S12. However, when the evaluation value acquisition unit 33 determines that the temperature acquired in S12 deviates from the reference temperature range (S13: YES), in S14 the evaluation value acquisition unit 33 acquires the length of elapsed time that has elapsed since a reference time based on the times acquired by the time acquisition unit 32. Here, the reference time is initially set to the time when the ink cartridge 2 is attached to the printer 1 and is subsequently updated to the time at which the temperature acquired in S12 is determined in S13 to be outside the reference temperature range. Thus, in S14 the evaluation value acquisition unit 33 acquires the length of the elapsed time from the time at which the temperature acquired in S12 last deviated from the reference temperature range. Note that the process of S14 to acquire the length of elapsed time is an example of the "elapsed time acquisition process" of the present invention.

In S15 the evaluation value acquisition unit 33 acquires a coefficient stored in the coefficient storage unit 31 in association with the reference temperature range. Based on the example in FIG. 2, the evaluation value acquisition unit 33 acquires the coefficients a2, b2, c2, d2, e2, f2, g2, and h2 associated with the temperature range T2-T3, and acquires one of the coefficients a2, b2, c2, d2, e2, f2, g2, and h2 corresponding to the type and color of ink in the ink cartridge 2 specified by the information recorded in the recording unit 22 of the ink cartridge 2.

In S16 the evaluation value acquisition unit 33 updates the reference temperature range. Specifically, when the temperature acquired in S12 has fallen below the lower limit of the current reference temperature range, the evaluation value acquisition unit 33 updates the reference temperature range to one range lower. On the other hand, when the temperature acquired in S12 exceeds the upper limit of the current reference temperature range, the evaluation value acquisition unit 33 updates the reference temperature range to one range higher. Using the example of FIG. 2, when a temperature t1 acquired in S12 is lower than the lower limit T2, the evaluation value acquisition unit 33 updates the reference temperature range to T1-T2. Alternatively, when the temperature t1 exceeds the upper limit T3, the evaluation value acquisition unit 33 updates the reference temperature range to T3-T4.

In S17 the evaluation value acquisition unit 33 multiplies the coefficient acquired in S15 by the length of elapsed time acquired in S14 to acquire the multiplication result as the evaluation value. In S18 the evaluation value accumulation unit 34 adds the evaluation value acquired in S 17 to the estimated evaporation amount in the recording unit 22 of the ink cartridge 2 to thereby acquire the accumulated evaluation values that have been acquired. The evaluation value acquisition unit 33 and evaluation value accumulation unit 34 repeat the above process from S12 while period B has not ended (S19: NO) and end the process of FIG. 5 when period B has ended (i.e., when the ink cartridge 2 is detached from the printer 1; S19: YES).

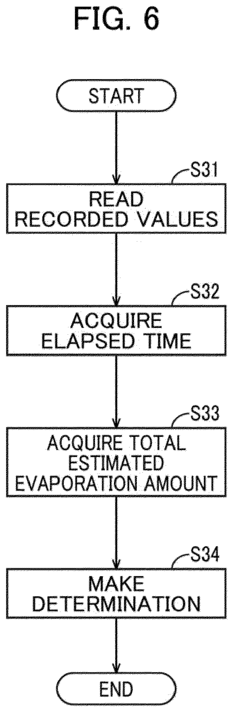

When a used ink cartridge 2 is recovered at the recycling plant, the evaluation device 5 (see FIG. 1) further evaluates the deterioration in the quality of ink stored in the ink cartridge 2 during a period C illustrated in FIG. 3. Period C is the period of time from the moment the used ink cartridge 2 is detached from the printer 1 until the evaluation device 5 makes the evaluation. The evaluation device 5 has hardware such as a CPU, ROM, and RAM, and software such as program data and other data stored in the ROM and RAM. The CPU of the evaluation device 5 executes various processes according to the software to implement the process illustrated in FIG. 6.

In S31 of FIG. 6, the evaluation device 5 reads the values recorded in the recording unit 22. In S32 the evaluation device 5 determines the length of period C based on the time read from the recording unit 22 and the time at which this evaluation is performed (i.e., the current time) and acquires the length of period C. The time recorded in the recording unit 22 has been updated in the printer 1 shortly before the ink cartridge 2 is detached therefrom. Accordingly, this time can be considered the approximate time at which the ink cartridge 2 was detached from the printer 1. Note that the length of period C corresponds to the "length of elapsed time in the third time period" of the present invention, and a process of the evaluation device 5 acquiring the length of period C corresponds to the "second elapsed time acquisition process" of the present invention.

In S33 the evaluation device 5 multiplies the length of elapsed time acquired in S32 by a prescribed value (a fixed value) to acquire the evaluation value for period C, and adds the acquired evaluation value to the estimated evaporation amount read from the recording unit 22 to acquire the total estimated evaporation amount. Here, the prescribed value is set larger than the prescribed value used for acquiring the evaluation value for period A. These settings reflect the fact that ink in the ink cartridge 2 is more susceptible to deterioration during period C than period A due to the lack of proper packaging and storage during period C.

In S34 the evaluation device 5 determines whether the ink cartridge 2 is reusable on the basis of the total estimated evaporation amount acquired in S33. For example, the evaluation device 5 determines that the ink cartridge 2 is reusable when the total estimated evaporation amount is equal to or less than a predetermined threshold and that the ink cartridge 2 is not reusable when the total estimated evaporation amount exceeds the predetermined threshold.

According to the present embodiment described above, an evaluation value is acquired for the ambient environment in each period of time. The evaluation value indicates the amount of liquid that has evaporated from the ink during each period of time. Evaporation of liquid from the ink corresponds to deterioration in ink quality. Accordingly, the evaluation value appropriately indicates the degree of deterioration in ink quality.

In the present embodiment described above, an evaluation value is acquired for each of two periods of time during which the ink cartridge 2 is subjected to different ambient environments, according to the following two aspects. An estimated evaporation amount that reflects the evaluation values for these two periods of time is recorded in the ink cartridge 2.

According to the first aspect, the ambient environment of the ink cartridge 2 fluctuates during the periods of time before and after the ink cartridge 2 is attached to the printer 1. On the basis of this aspect, an evaluation value is obtained by multiplying the length of elapsed time during period A prior to the ink cartridge 2 being attached to the printer 1 by a fixed value, and an evaluation value is acquired by multiplying a temperature-based coefficient by the length of elapsed time during period B during which the ink cartridge 2 is attached to the printer 1. Subsequently, a value acquired by adding the evaluation value for period A to the evaluation value for period B is recorded in the recording unit 22 of the ink cartridge 2 as the estimated evaporation amount.

According to the second aspect, the temperature as the ambient environment for the ink cartridge 2 differs at different time intervals within period B. On the basis of this aspect, an evaluation value is acquired for each individual time interval within period B by multiplying a temperature-based coefficient for each time interval by the length of elapsed time of that time interval. The evaluation values acquired for all time intervals are then accumulated in the recording unit 22 of the ink cartridge 2 as the estimated evaporation amount.

Therefore, the quality of ink in an ink cartridge 2 detached from the printer 1 and recovered can be appropriately evaluated while accounting for fluctuating conditions in the ambient environment using the estimated evaporation amount calculated as described above.

Further, the amount of liquid evaporation from ink is greatly affected by this ambient temperature. An evaluation value reflecting the continually changing temperature in period B is acquired for each of predetermined time intervals according to the first and second methods described above and accumulated in the recording unit 22 of the ink cartridge 2 as the estimated evaporation amount. Using this estimated evaporation amount, the evaluation can suitably follow the conditions in period B, whose ambient environment is expected to vary more greatly than in period A.

According to the second method described above, the evaluation value is acquired and accumulated each time a predetermined change in temperature occurs. Therefore, the accumulation process is not performed unnecessarily since the evaluation values are acquired and accumulated at necessary timings.

In the present embodiment described above, the current time is periodically recorded in the recording unit 22 of the ink cartridge 2. Accordingly, the time at which the ink cartridge 2 was detached from the printer 1 can be acquired at the recycling plant. On the basis of this time, the evaluation device 5 can acquire a total estimated evaporation amount by considering an evaluation value for period C. Since recycling potential (reusability) of the ink cartridge 2 is determined on the basis of this total estimated evaporation amount, the deteriorated condition of ink can be appropriately evaluated over the entire period of time from the manufacture date of the ink cartridge 2 until the ink cartridge 2 is collected at the recycling plant.

As described above, evaluation values acquired in the printer 1 are accumulated in the recording unit 22 of the ink cartridge 2 as the estimated evaporation amount. In place of or in addition to such a configuration, the printer 1 may transmit each evaluation value to the external server 900 to be accumulated on the external server 900 as the estimated evaporation amount. In this case, the process to transmit the evaluation values from the printer 1 to the external server 900 corresponds to the "outputting process" of the present invention, and each of the transmitted evaluation values corresponds to the "output value" of the present invention. The estimated evaporation amount accumulated on the external server 900 and the time at which the last evaluation value was transmitted from the printer 1 to the external server 900 (≈ the time at which the ink cartridge 2 was detached from the printer 1) are transmitted to the evaluation device 5, as depicted by the two-dot chain line in FIG. 1. These values are then used for the evaluation performed by the evaluation device 5 in the same manner described above. An association between the estimated evaporation amount and the recovered ink cartridge 2 is made on the external server 900, for example, by the external server 900 associating identification information (e.g., an account ID for the user of the printer 1) with the estimated evaporation amount on the external server 900 and the printer 1 recording this identification information in the recording unit 22 of the ink cartridge 2.

### < Modifications >

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below:

For example, the evaluation value in the above embodiment is acquired primarily using a temperature-based coefficient. However, instead of or in addition to temperature, evaluation values may be acquired on the basis of other environmental factors (humidity, air pressure, etc.) that may affect the degree of change in ink quality.

In the embodiment described above, determination regarding whether an ink cartridge 2 is reusable is made on the basis of the total estimated evaporation amount, which is the accumulation (sum) of all evaluation values for periods A-C. However, the evaluation of reusability may be based only on the evaluation values for two periods of time whose ambient environments differed. For example, the evaluation may be performed using only the evaluation values for periods A and C. Alternatively, an evaluation may be performed based only on the evaluation values obtained during two or more time intervals within period B. Alternatively, an evaluation may be performed based only on evaluation values obtained in at least one time interval within period B and the evaluation value for period C.

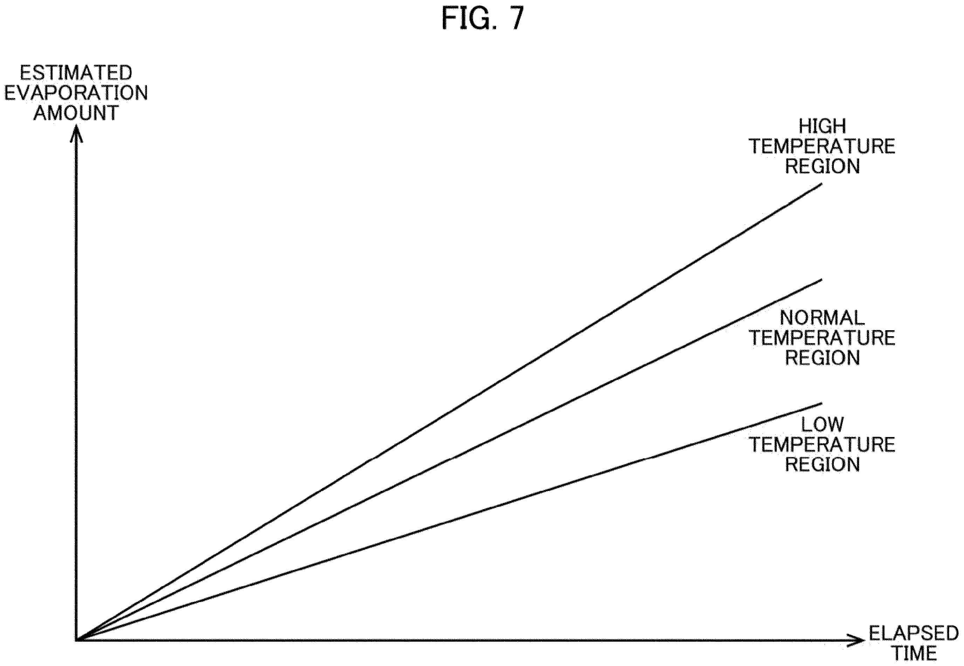

In the above embodiment, the table in FIG. 2 is used as one example showing relationships between temperatures and degrees of evaporation. However, the following configuration illustrated in FIG. 7 may be employed in place of this table. In this configuration, the estimated amount of evaporation is proportional to the length of elapsed time, and three values are set as proportionality constants associated with a respective high temperature region, normal temperature region, and low temperature region. Here, the low temperature region is a region of temperatures lower than a temperature Ta; the normal temperature region is a region of temperatures between temperatures Ta and Tb (Ta < Tb), more specifically, a region of temperatures higher than or equal to Ta and lower than or equal to Tb; and the low temperature region is a region of temperatures that exceed temperature Tb. The proportionality constant is then selected from among these three values based on the temperature detected by the temperature detection unit 20. The estimated amount of evaporation for a certain period of time is then calculated by multiplying the selected proportionality constant by the length of the period (elapsed time).

While the present invention is applied to the printer 1 in the embodiment described above, the present invention may be applied to other inkjet-type image forming devices that eject ink from a print head, such as multifunction peripherals, copy machines, and the like, or systems having these image forming devices. The present invention may also be applied to laser-type image forming devices that execute image recording processes by depositing toner (corresponding to the "colorant" of the present invention) on printing paper rather depositing ink on printing paper, as in the inkjet method. In this case, a toner cartridge accommodating toner is detachably attached to the image forming device.

## Claims

1. An image forming device to which a cartridge (2) storing colorant to be used for image formation is detachably attachable, the image forming device comprising:
an image formation portion (10) configured to form an image on a medium using the colorant stored in the cartridge (2) attached to the image forming device; and
a controller (30) configured to perform:
an elapsed time acquisition process acquiring a length of elapsed time in each of a first time period and a second time period;
an evaluation value acquisition process acquiring an evaluation value including a first evaluation value for the first time period and a second evaluation value for the second time period, each of the first evaluation value and the second evaluation value specifying a degree of change in a quality of the colorant in the cartridge (2) during a corresponding one of the first time period and the second time period and being based on the length of elapsed time acquired in the elapsed time acquisition process and an ambient environment of the cartridge affecting the quality of the colorant, the ambient environment in the first time period being different from the ambient environment in the second time period; and
an outputting process outputting an output value reflecting both the first evaluation value and the second evaluation value.

2. The image forming device according to claim 1, further comprising:
an acquisition portion (20) configured to acquire an environmental value indicating the ambient environment,
wherein in the evaluation value acquisition process, the controller (30) acquires the evaluation value based on the environmental value acquired by the acquisition portion (20).

3. The image forming device according to claim 2,
wherein in the evaluation value acquisition process, the controller (30) acquires the first evaluation value assuming that no fluctuations occur in the ambient environment during the first time period, and acquires the second evaluation value based on the environmental value acquired by the acquisition portion during the second time period.

4. The image forming device according to claim 3,
wherein in the evaluation value acquisition process, the controller (30) acquires, for the second time period, a plurality of interval evaluation values for respective ones of a plurality of predetermined time intervals in the second time period and accumulates the plurality of interval evaluation values to acquire the second evaluation value, each of the plurality of interval evaluation values being based on the length of elapsed time in each predetermined time interval and the environmental value acquired in a corresponding one of the plurality of predetermined time intervals.

5. The image forming device according to claim 3,
wherein in the evaluation value acquisition process, the controller (30) acquires, for the second time period, at least one interval evaluation value for respective ones of at least one time interval in the second time period and accumulates the at least one interval evaluation value to acquire the second evaluation value, the at least one interval evaluation value being acquired each time a predetermined change in the environment value acquired by the acquisition portion (20) occurs and being based on the length of elapsed time in a corresponding one of the at least one time interval and the environmental value acquired in the corresponding one of the at least one time interval.

6. The image forming device according to any one of claims 2 to 5,
wherein the environmental value acquired by the acquisition portion (20) indicates a temperature.

7. The image forming device according to any one of claims 1 to 6,
wherein the quality of the colorant is related to an amount of a liquid in the colorant, and
wherein the evaluation value is an estimated evaporation amount of the liquid in the colorant.

8. The image forming device according to any one of claims 2 to 6,
wherein the quality of the colorant is related to an amount of a liquid in the colorant,
wherein the controller (30) includes a storage portion (31) configured to store an evaporation degree value specifying a degree of evaporation in association with the environmental value for the liquid in the colorant, and
wherein in the evaluation value acquisition process, the controller (30) acquires, as the evaluation value, an estimated evaporation amount of the liquid in the colorant based on the environmental value acquired by the acquisition portion (20) and the evaporation degree value stored in the storage portion (31) in association with the environmental value.

9. The image forming device according to any one of claims 1 to 8,
wherein the first time period is a period of time prior to the cartridge (2) being attached to the image forming device, and
wherein the second time period is a period of time during which the cartridge (2) is attached to the image forming device.

10. The image forming device according to any one of claims 1 to 9,
wherein the outputting process comprises at least one of:
an output value recording process recording the output value in a recording portion (22) of the cartridge (2); and
a transmitting process transmitting the output value to an external device (900) via a communication network (N).

11. The image forming device according to any one of claims 1 to 9,
wherein the outputting process comprises:
an output value recording process recording the output value in a recording portion (22) of the cartridge (2); and
a current time recording process (35) periodically recording a current time in the recording portion (22) of the cartridge (2).

12. An image formation system comprising:
the image forming device (1) according to claim 11;
the cartridge (2); and
an evaluation device (5) configured to perform:
a second elapsed time acquisition process acquiring a length of elapsed time in a third time period based on the current time recorded in the recording portion (22) of the cartridge (2), the third time period being a period of time after the cartridge (2) is detached from the image forming device (1);
a second evaluation value acquisition process acquiring a third evaluation value for the third time period, the third evaluation value specifying a degree of change in a quality of the colorant in the cartridge (2) during the third time period and being based on the length of elapsed time acquired in the second elapsed time acquisition process; and
a determination process determining whether the cartridge (2) is reusable on the basis of the third evaluation value acquired in the second evaluation value acquisition process and the output value recorded in the recording portion (22) of the cartridge (2).
